# EUROPEAN PATENT APPLICATION

(11) **EP 4 622 190 A1**
(43) Date of publication of application: **24.09.2025**
(21) Application number: 22965427.2
(22) Date of filing: 14.11.2022
(51) Int. Cl.: H04L 27/00

(54) **WIRELESS COMMUNICATION METHOD AND APPARATUS, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Taor, Simon Edward William
(86) International application number: PCT/CN2022/131781
(87) International publication number: WO 2024/103234

(57) **Abstract**

Provided in the embodiments of the present application are a wireless communication method and apparatus, a terminal device, and a network device. The method comprises: a terminal device receiving first information on a first bandwidth part (BWP), wherein the first information is used for indicating a second BWP, and the first BWP is a BWP that is currently activated by the terminal device; and the terminal device performing communication on the second BWP.

## Description

### TECHNICAL FIELD

Embodiments of the disclosure relate to the technical field of mobile communication, and in particular to a method and apparatus for wireless communication, a terminal device and a network device.

### BACKGROUND

With the development of communication technology, communication transmission resources are becoming increasingly scarce. How to improve the utilization rate of resources is a technical problem to be solved urgently at present.

### SUMMARY

Embodiments of the disclosure provide a method and apparatus for wireless communication, a terminal device and a network device.

An embodiment of the disclosure also provides a method for wireless communication, and the method includes the following operations.

A terminal device receives first information on a first bandwidth part (BWP), the first information being used for indicating a second BWP. The first BWP is a currently activated BWP for the terminal device.

The terminal device performs communication on the second BWP.

An embodiment of the disclosure also provides a method for wireless communication, and the method includes the following operations.

A network device transmits first information to a terminal device on a first BWP, the first information being used for indicating a second BWP. The first BWP is a currently activated BWP for the terminal device.

The network device performs communication with the terminal device on the second BWP.

An embodiment of the disclosure also provides an apparatus for wireless communication. The apparatus for wireless communication is applied to a terminal device, and includes a first transceiver unit.

The first transceiver unit is configured to receive first information on a first BWP, the first information being used for indicating a second BWP. The first BWP is a currently activated BWP for the terminal device.

The first transceiver unit is further configured to perform communication on the second BWP.

An embodiment of the disclosure also provides an apparatus for wireless communication. The apparatus for wireless communication is applied to a network device, and includes a second transceiver unit.

The second transceiver unit is configured to transmit first information to a terminal device on a first BWP, the first information being used for indicating a second BWP. The first BWP is a currently activated BWP for the terminal device.

The second transceiver unit is further configured to perform communication with the terminal device on the second BWP.

There is provided a communication device in an embodiment of the disclosure, which may be the terminal device in the above solution or the network device in the above solution, and includes a processor and a memory. The memory is used to store a computer program, and the processor is used to invoke and execute the computer program stored in the memory to perform the method for wireless communication described above.

There is provided a chip in an embodiment of the disclosure, and the chip is used to perform the method for wireless communication described above.

Specifically, the chip includes a processor, and the processor is used to invoke and execute a computer program from a memory to cause a device on which the chip is mounted to perform the method for wireless communication described above.

There is provided a computer-readable storage medium in an embodiment of the disclosure. The computer-readable storage medium having stored thereon a computer program that, when executed by a computer, causes the computer to perform the method for wireless communication described above.

There is provided a computer program product in an embodiment of the disclosure. The computer program product has stored therein computer program instructions that, when executed by a computer, cause the computer to perform the method for wireless communication described above.

There is provided a computer program in an embodiment of the disclosure. The computer program, when executed by a computer, causes the computer to perform the method for wireless communication described above.

In the method for wireless communication provided in embodiments of the disclosure, the terminal device may use the second BWP for data transmission under the indication of the network device, thereby improving the resource utilization rate.

### BRIEF DESCRIPTION OF THE DRAWINGS

The accompanying drawings illustrated herein are intended to provide a further understanding of the disclosure and form part of the disclosure. The schematic embodiments of the disclosure and their description are intended to explain the disclosure, and do not constitute an unduly limiting of the disclosure. In the accompanying drawings:
FIG. 1 is a schematic diagram of communication architecture according to an embodiment of the disclosure.
FIG. 2 is a schematic structural diagram of a receiver system of a terminal device according to an embodiment of the disclosure.
FIG. 3A is a first timing diagram for cross-BWP scheduling according to an embodiment of the disclosure.
FIG. 3B is a second timing diagram for cross-BWP scheduling according to an embodiment of the disclosure.
FIG. 4 is a first schematic flowchart of a method for wireless communication according to an embodiment of the disclosure.
FIG. 5 is a timing diagram for special signal transmission according to an embodiment of the disclosure.
FIG. 6 is a second schematic flowchart of the method for wireless communication according to an embodiment of the disclosure.
FIG. 7A is a third schematic flowchart of the method for wireless communication according to an embodiment of the disclosure.
FIG. 7B is a fourth schematic flowchart of the method for wireless communication according to an embodiment of the disclosure.
FIG. 8 is a first timing diagram for signal transmission according to an embodiment of the disclosure.
FIG. 9 is a second timing diagram for signal transmission according to an embodiment of the disclosure.
FIG. 10A is a third timing diagram for signal transmission according to an embodiment of the disclosure.
FIG. 10B is a fourth timing diagram for signal transmission according to an embodiment of the disclosure.
FIG. 11 is a fifth schematic flowchart of the method for wireless communication according to an embodiment of the disclosure.
FIG. 12 is a first schematic diagram of a compositional structure of an apparatus for wireless communication according to an embodiment of the disclosure.
FIG. 13 is a second schematic diagram of a compositional structure of an apparatus for wireless communication according to an embodiment of the disclosure.
FIG. 14 is a schematic structural diagram of a communication device according to an embodiment of the disclosure.
FIG. 15 is a schematic structural diagram of a chip according to an embodiment of the disclosure.
FIG. 16 is a schematic block diagram of a communication system according to an embodiment of the disclosure.

### DETAILED DESCRIPTION

The technical solutions in the embodiments of the disclosure will be described below with reference to the accompanying drawings in the embodiments of the disclosure. It will be apparent that the described embodiments herein are only part of but not all of the embodiments in the disclosure. Based on the embodiments in the disclosure, all other embodiments obtained by those of ordinary skilled in the art without making any creative effort fall within the scope of protection of the disclosure.

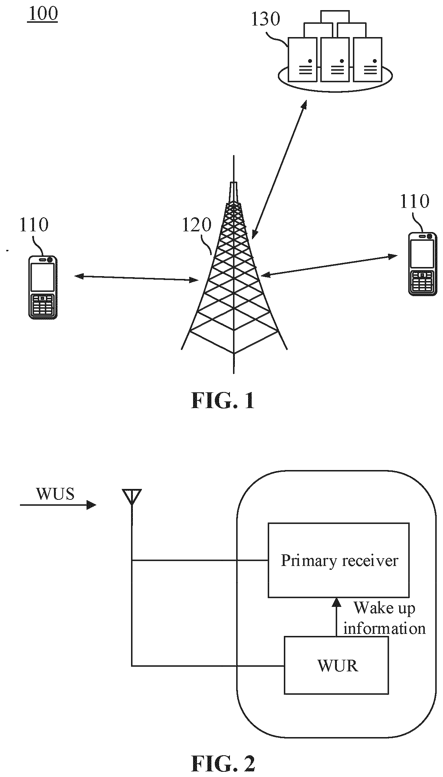

FIG. 1 is a schematic diagram of an application scenario according to an embodiment of the disclosure.

As shown in FIG. 1, a communication system 100 may include a terminal device 110 and a network device 120. The network device 120 may communicate with the terminal device 110 through an air interface. Multi-service transmission is supported between the terminal device 110 and the network device 120.

It is to be understood that the embodiment of the disclosure illustrates only the communication system 100, but embodiments of the disclosure are not limited thereto. That is to say, the technical solutions of the embodiment of the disclosure may be applied to various communication systems, such as a long term evolution (LTE) system, an LTE time division duplexing (TDD) system, a universal mobile telecommunication system (UMTS), an Internet of things (IoT) system, a narrow band Internet of things (NB-IoT) system, an enhanced machine-type communications (eMTC) system, a 5G communication system (also referred to as a new radio (NR) communication system), or future communication systems, etc.

In the communication system 100 illustrated in FIG. 1, the network device 120 may be an access network device that communicates with the terminal device 110. The access network device may provide communication coverage for a particular geographic area and perform communication with the terminal device 110 (e.g., UE) within that coverage area.

The network device 120 may be an evolutional node B (eNB or eNodeB) in an LTE system, or a next generation radio access network (NG RAN) device, or a base station (gNB) in an NR system, or a wireless controller in a cloud radio access network (CRAN). Alternatively, the network device 120 may be a relay station, an access point, an in-vehicle device, a wearable device, a hub, a switch, a bridge, a router, or a network device in a future evolved public land mobile network (PLMN), etc.

The terminal device 110 may be any terminal device including, but not limited to, a terminal device connected to the network device 120 or other terminal devices via wired or wireless connections.

For example, the terminal device 110 may be an access terminal, a user equipment (UE), a subscriber unit, a subscriber station, a mobile station, a remote station, a remote terminal, a mobile device, a user terminal, a terminal, a wireless communication device, a user agent or a user device. The access terminal may be a cellular telephone, a cordless telephone, a session initiation protocol (SIP) telephone, an IoT device, a satellite handheld terminal, a wireless local loop (WLL) station, a personal digital assistant (PDA) device, a handheld device with wireless communication capabilities, a computing device or other processing device connected to a wireless modem, an in-vehicle device, a wearable device, a terminal device in a 5G network, or a terminal device in a future evolved network.

The terminal device 110 may be used for device to device (D2D) communication.

The wireless communication system 100 may further include a core network device 130 that performs communication with the network device 120. The core network device 130 may be a 5G core (5GC) device, such as an access and mobility management function (AMF), or an authentication server function (AUSF), or a user plane function (UPF), or session management function (SMF). Optionally, the core network device 130 may also be an evolved packet core (EPC) device of an LTE network, such as a session management function + core packet gateway (SMF + PGW-C) device. It is to be understood that the SMF + PGW-C may simultaneously implement functions that can be achieved by both the SMF and the PGW-C. In the process of network evolution, the above-mentioned core network device may also be called by other names, or a new network entity may be formed by performing partition on the functions of the core network, which is not limited in the embodiments of the disclosure.

The various functional units in the communication system 100 may also establish a connection between each other through a next generation (NG) network interface to implement communication.

For example, the terminal device establishes an air interface connection with the access network device through the NR interface for the transmission of user plane data and control plane signaling. The terminal device may establish a control plane signaling connection with the AMF through the NG interface 1 (N1 for short). The access network device, such as the next generation radio access base station (gNB), may establish a user plane data connection with the UPF through the NG interface 3 (N3 for short). The access network device may establish a control plane signaling connection with the AMF through the NG interface 2 (N2 for short). The UPF may establish a control plane signaling connection with the SMF through the NG interface 4 (N4 for short). The UPF may interact with the data network to handle user plane data through the NG interface 6 (N6 for short). The AMF may establish a control plane signaling connection with the SMF through the NG interface 11 (N11 for short). The SMF may establish a control plane signaling connection with the PCF through the NG interface 7 (N7 for short).

FIG. 1 exemplifies one network device, one core network device, and two terminal devices. Optionally, the wireless communication system 100 may include multiple network devices, and the coverage of each network device may include another number of terminal devices, which is not limited in the embodiments of the disclosure.

It is to be noted that, FIG. 1 illustrates, by way of example only, the system to which the disclosure is applicable, although the method illustrated in the embodiments of the disclosure may also be applied to other systems. Furthermore, the terms "system" and "network" are generally used interchangeably herein. In this context, the term "and/or" merely indicates an association relationship for describing associated objects, and represents that there are three kinds of relationships. For example, "A and/or B" may represent three situations, i.e., independent existence of A, existence of both A and B, and independent existence of B. Additionally, the character "/" herein generally represents that the previous and next objects form a kind of "or" relationship. It is also to be understood that "indicate/indication" mentioned in the embodiments of the disclosure may be a direct indication, or may be an indirect indication, or may represent that there is an association relationship. For example, A indicates B, which may represent that A indicates B directly, for example, B may be acquired through A; or, may represent A indicate B indirectly, for example, A indicates C, and B may be acquired through C; or may represent that there is an association relationship between A and B. It is also to be understood that "correspond/correspondence" mentioned in the embodiment of the disclosure may represent that there is a direct or indirect correspondence between the two objects; or, may represent that there is an association relationship between two objects; or, may be a relationship such as indicating and being indicated, configuring and being configured, etc. It is also to be understood that "predefined/predefinition" or "predefined rule" mentioned in the embodiments of the disclosure may be implemented by storing corresponding codes, tables, or other means which may be used to indicate relevant information in advance within a device (including, for example, a terminal device and a network device), the specific implementation thereof are not be limited in the disclosure. For example, "predefined" may be "defined in a protocol". It is also to be understood that, in an embodiment of the disclosure, the "protocol" may be a standard protocol in the field of communications, and for example, it may include an LTE protocol, an NR protocol, and relevant protocols applied to future communication systems, which are not limited in the disclosure.

For convenience of understanding of technical solutions in the embodiments of the disclosure, the related technologies of the embodiments of the disclosure will be elaborated below. The following related technologies, as alternatives, may be arbitrarily combined with the technical solutions in the embodiments of the disclosure, all of which belong to the scope of protection of the embodiments of the disclosure.

In order to further reduce power consumption of a terminal device, the standard version 18 (R18) for discussion considers introducing a wake up receiver (WUR) for the terminal device so that a wake up signal (WUS) is received by the WUR. The WUR has the characteristics of extremely low cost, extremely low complexity and extremely low power consumption, and it mainly receives the WUS based on envelope detection. Therefore, the WUS received by the WUR is different from the signals defined in R16 and R17, which are carried by the physical downlink control channel (PDCCH), in terms of modulation mode, waveform, and the like. The WRS mainly includes an envelope signal generated by modulating a carrier signal using amplitude shift keying (ASK). The demodulation of the envelope signal may be performed by a low power circuit driven by the energy provided from the wireless radio frequency signal. Therefore, the WUR may be a passive receiver. Alternatively, the WUR may be powered by the terminal device. No matter which power supply mode is adopted, the WUR can greatly reduce the power consumption compared with the traditional receiver of the terminal device. The WUR may be combined with the primary receiver in the terminal device, as an additional module of the primary receiver; or the WUR may be used alone as a wake up function module of the terminal device.

For example, reference is made to the schematic structural diagram of the receiver system of the terminal device illustrated in FIG. 2 where the primary receiver in the terminal device shares a set of radio frequency antennas with the WUR. The WUR may receive the WUS, and if the terminal device is required to turn on the primary receiver, the WUR may transmit wake up information to the primary receiver to indicate the turning on of the primary receiver. Otherwise, the primary receiver of the terminal device may be in an off state.

In practical applications, at any given time, the terminal device may have at most one activated downlink BWP and one activated uplink BWP. The network device may configure at most 4 uplink BWPs and at most 4 downlink BWPs for a terminal device in a connected state. Herein, the activated uplink BWP may be one of the configured at most 4 uplink BWPs, and the activated downlink BWP may be one of the configured at most 4 downlink BWPs.

For a frequency division duplexing (FDD) system, there is not an explicit association between the uplink BWP and the downlink BWP. For example, the network device may configure 4 uplink BWPs (index values of the 4 uplink BWPs are 0, 1, 2, 3, respectively) and 4 downlink BWPs (index values of the 4 downlink BWPs are 0, 1, 2, 3, respectively) for the terminal device in the connected state. An index value of the currently activated uplink BWP may be 0, that is, uplink BWP 0, and an index value of the currently activated downlink BWP may be 1, that is, downlink BWP 1. If the network device indicates a switching from downlink BWP 0 to downlink BWP 2, the activated uplink BWP for the terminal device may remain unchanged.

For the TDD system, the uplink BWP and the downlink BWP need to be switched in pairs. The uplink BWP and the downlink BWP with the same BWP index indicated by the network device are in the active state at the same time.

The terminal device supports multiple BWP switching modes, including, but not limited to, a BWP switching controlled based on downlink control information (DCI), a BWP switching based on radio resource control (RRC) signaling, a BWP switching based on timer, and a BWP switching triggered based on random access channel (RACH).

Herein, in the BWP switching triggered by the DCI, a BWP indicator may be included in the DCI for performing data scheduling on the terminal device, and a number of bits of the indicator may be determined based on a number of BWPs configured by the network device for the terminal device, for example, the number of bits of the indicator may be 0, 1, or 2. Specifically, the bit length of the BWP indicator is log₂(*n*_{BWP}), where *n*_{BWP} is the number of BWPs configured by the network device for the terminal device.

Herein, in a case where the number of BWPs (*n*_{BWP,RRC}) configured by higher layer RRC signaling is less than or equal to 3 (i.e., *n*_{BMP,RRC} ≤ 3 ) , *n*_{BWP} = n_{BWP,RRC} + 1. In this scenario, the BWP indicator is the same as the BWP-ID configured by a higher layer parameter. In other cases, *n*_{BMP} *= n*_{BWP,RRC}*.* For example, Table 1 illustrates an association between values of the BWP indicator and the BWPs in a case where the network device configures 4 BWPs through the higher layer signaling.

**Table 1**

| value of the BWP indicator | BWP |
|---|---|
| 2 bits | |
| 00 | first BWP configured by the higher layer signaling |
| 01 | second BWP configured by the higher layer signaling |
| 10 | third BWP configured by the higher layer signaling |
| 11 | fourth BWP configured by the higher layer signaling |

As can be seen, when the value of the BWP indicator is 00, the first BWP configured by the higher layer signaling may be indicated. When the value of the BWP indicator is 01, the second BWP configured by the higher layer signaling may be indicated. When the value of the BWP indicator is 10, the third BWP configured by the higher layer signaling may be indicated. When the value of the BWP indicator is 11, the fourth BWP configured by the higher layer signaling may be indicated.

When the BWP for the terminal device is required to be switched, the network device may indicate an indication value in the BWP indicator in the DCI transmitted to the terminal device, and the indication value corresponds to a BWP different from the BWP where the terminal device is currently located. The terminal device may perform the BWP switching after receiving the BWP.

In addition, the terminal device may also perform the BWP switching based on a timer. The terminal device may be configured with a BWP timer, so that the terminal device may reset the BWP timer every time it receives a DCI scheduling at the current BWP, and then keeps timing. When the BWP timer expires, the terminal device may switch to a default BWP.

It is to be understood that the BWP may be applied to both PDCCH reception and physical downlink shared channel (PDSCH) reception, and each BWP includes a control resource set (CORESET). In this way, in the absence of BWP switching, the PDCCH in a BWP may be used to schedule the PDSCH in the same BWP, and the subcarrier spacings of the PDCCH and the scheduled PDSCH are also the same.

In practical applications, the NR system supports cross-BWP scheduling. Specifically, the terminal device receives DCI, and the DCI contains BWP indication information that triggers the BWP switching. If the BWP indicated by the BWP indication information is different from the currently activated BWP, the BWP switching is performed prior to the PDSCH scheduled by the DCI, and thus, the PDCCH and the PDSCH scheduled by the PDCCH are in different BWPs. Such an operation may be referred to as the cross-BWP scheduling.

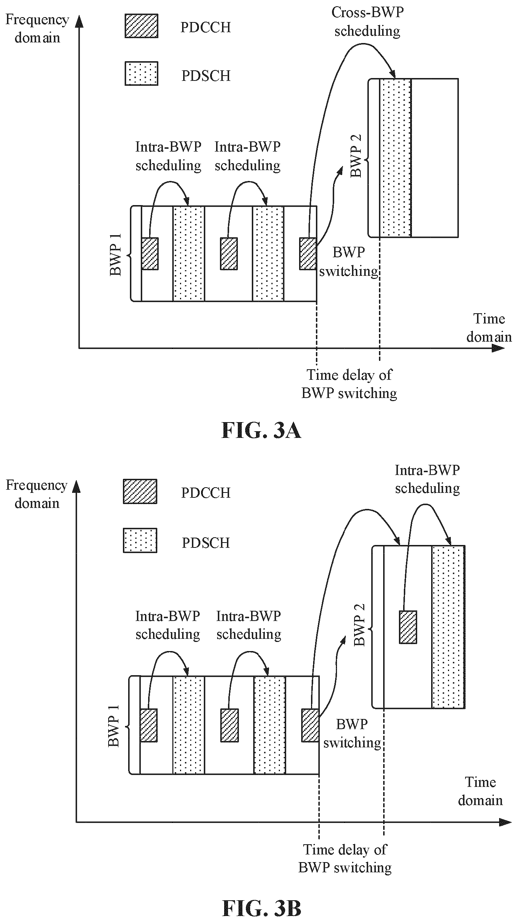

As illustrated in FIG. 3A, if the cross-BWP scheduling is allowed, the DCI that triggers the BWP switching in BWP 1 may directly schedule the PDSCH in BWP 2 after the BWP switching is completed, so that data may be received in the scheduled PDSCH immediately after the activated BWP for the terminal device is switched to BWP 2. Of course, the indication of the BWP switching using the scheduling DCI is the most efficient way to achieve "the cross-BWP scheduling".

Alternatively, if the cross-BWP scheduling is not allowed, a dedicated DCI format for the BWP switching may be used, but it is difficult to achieve fast scheduling. As illustrated in FIG. 3B, the last DCI in BWP 1 is only used to trigger the BWP switching, but not to schedule the PDSCH. After the BWP switching is completed, the terminal device detects DCI scheduling the PDSCH in the switched BWP 2, acquires scheduling information of the PDSCH, and receives data on the scheduled PDSCH at a later time.

It is to be understood that, for the BWP switching and the cross-BWP scheduling mechanism, the BWP indication information in the DCI indicates the BWP switching, at the same time, the resource indication information in the DCI indicates a time-frequency resource of a new BWP after the BWP switching. That is to say, the BWP switching and the cross-BWP scheduling are performed simultaneously as indicated by the DCI.

It is to be noted that, in the embodiments of the disclosure, DCI indicating the BWP switching and the cross-BWP scheduling is referred to as scheduling DCI.

In practical applications, in order to improve the resource utilization rate, time-frequency resources carrying special signals (such as WUS, paging signals, synchronization signal blocks, etc.) are multiplexed with time-frequency resources of the existing NR channels and signals, so as to avoid large resource overhead associated with configuring dedicated time-frequency resources for special signals. Furthermore, if the time-frequency resources carrying the special signals are not at the edge of the existing system bandwidth, some resource "holes" will be formed in the frequency domain resources within the system bandwidth, thereby causing the failure of the network device to schedule continuous frequency domain resources for data transmission, and decreasing the resource utilization rate. Since the range of the frequency domain resources scheduled for the data is the frequency domain resources within the activated BWP, the corresponding BWPs may be configured separately for the special signals without generating resource "holes" caused by configuring the frequency domain resources for the special signals on the BWP scheduled for the data.

It is to be understood that in a scenario where a separate BWP is configured for the special signal, the special signal is not transmitted continuously, for example, the special signal is transmitted with a certain period. In order to improve the resource utilization rate, when the special signal is not transmitted, the network device may use BWP configured for the special signal for resource scheduling. There is currently no clear method on how to schedule these BWPs.

For convenience of understanding of technical solutions in the embodiments of the disclosure, the technical solutions in the disclosure are described in detail by way of specific embodiments below. The above related technologies, as alternatives, may be arbitrarily combined with the technical solutions in the embodiments of the disclosure, all of which belong to the scope of protection of the embodiments of the disclosure. The embodiments of the disclosure include at least some of the following contents.

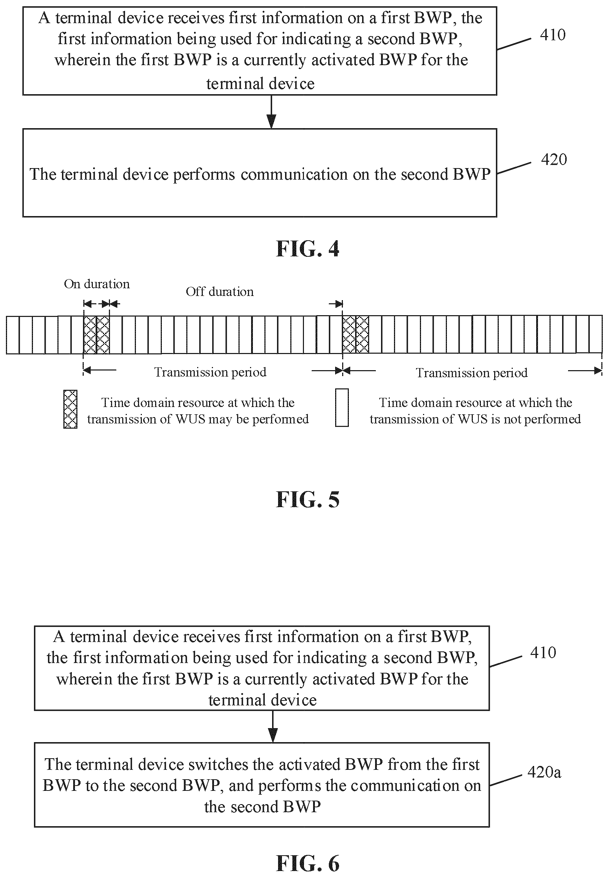

As illustrated in FIG. 4, the method for wireless communication according to an embodiment of the disclosure may include operation 410 and operation 420.

In operation 410, a terminal device receives first information on a first BWP, the first information being used for indicating a second BWP. The first BWP is a currently activated BWP for the terminal device.

In operation 420, the terminal device performs communication on the second BWP.

Herein, the first information may be transmitted by the network device or forwarded by other device(s) from the network device, which is not limited in the embodiments of the disclosure.

In some embodiments, the first BWP may be the currently activated BWP for the terminal device. The first BWP may be configured by the network device, or pre-configured, or agreed upon in the protocol, which is not limited in the embodiments of the disclosure.

It is to be understood that, the network device may transmit the first information to the terminal device through the currently activated BWP for the terminal device. Accordingly, the terminal device may receive, on at least part of the time-frequency resources of the currently activated BWP, the first information transmitted by the network device.

Herein, the first information may indicate a second BWP different from the first BWP. It is to be understood that after receiving the first information, the terminal device may perform communication with the network device through the second BWP indicated by the first information.

In some embodiments, the second BWP may be a BWP where the special signal is located, that is, a BWP configured by the network device for the transmission of the special signal. The special signal may be a signal that is used to wake up the primary receiver of the terminal device for the transmission of data and/or control information, thereby reducing the power consumption of the terminal device. For example, the special signal may be a WUS, an energy saving signal, a paging signal, or the like, which is not limited in the embodiments of the disclosure.

That is to say, the second BWP may be at least one of: a BWP where the WUS is located, a BWP where the energy saving signal is located, or a BWP where the paging signal is located.

It is to be noted that, the WUS and the energy saving signal may be the same signal or different signals, which is not limited in the embodiments of the disclosure.

It is also to be noted that, the first information may be a physical layer control signaling, such as DCI; or the first information may be a higher layer control signaling, such as a radio resource control (RRC) signaling; or the first information may be a dedicated signaling, which is not limited in the embodiments of the disclosure.

In some embodiments, the first information may include BWP indication information, and the BWP indication information may carry information capable of uniquely identifying the second BWP, such as identification information or an index value of the second BWP.

It is to be understood that the time-frequency resource on the second BWP corresponding to the special signal may be used for the transmission of the special signal. Since the transmission of the special signal is not always performed, the transmission of other data may be performed on the time-frequency resource where the transmission of the special signal is not performed, thereby improving the resource utilization rate.

In an embodiment of the disclosure, the network device, as a resource scheduler, may indicate the terminal device to perform communication on the second BWP where the special signal is located. Herein, the second BWP may be used for the transmission of data. Alternatively, the second BWP may be used for the transmission of both data and control information. It is to be understood that, the operation that the communication is performed on the second BWP may include that the transmission of data is performed on the second BWP, or the transmission of both data and control information is performed on the second BWP, which is not limited in the embodiments of the disclosure. For example, the data transported on the second BWP may be a PDSCH, and the control information may be a PDCCH.

It can be seen that the terminal device may, as indicated by the network device, multiplex the second BWP configured by the network device for the special signal to perform communication, thereby effectively improving the utilization rate of spectrum resources.

It is to be understood that the frequency domain bandwidth of the second BWP corresponding to the special signal is generally small, and is mainly used for transmitting the special signal. However, the special signal is not always transmitted. For example, as illustrated in FIG. 5, when the special signal is transmitted periodically, the special signal may only be transmitted during an on duration within a transmission period, but is not transmitted during an off duration thereof.

Therefore, during the off duration, the time-frequency resource on the second BWP corresponding to the special signal may be used for other types of communication. Based on this, the network device may indicate, through the first information, the terminal device to perform communication on the second BWP that is separately configured for the special signal.

However, if the network device is required to perform the cross-BWP scheduling, the network device may trigger the terminal device to perform the BWP switching at the same time. That is to say, the activated BWP for the scheduled terminal device is switched to the second BWP where the special signal is located. This may not be the desired result of the network, because the second BWP where the special signal is located is mainly used for the transmission of the special signal, and the search space for the PDCCH is not necessarily configured. The terminal device uses the second BWP as the activated BWP, which may cause the terminal device to be unable to further receive control information to switch to another BWP. Moreover, the bandwidth of the second BWP corresponding to the special signal is generally small. If the network device is required to perform data interaction with the terminal device, it is also undesirable for the terminal device to switch to the second BWP where the special signal is located and to use the second BWP as the activated BWP.

Based on this, in an embodiment of the disclosure, after completing communication on the second BWP, the terminal device may still use the first BWP as the activated BWP and resume communication on the first BWP. That is to say, after completing communication on the second BWP, the terminal device may actively perform communication on the first BWP that is originally activated.

In one possible implementation, the terminal device may not switch the status of the activated BWP during the process of responding to the first information. That is to say, the activated BWP for the terminal device may remain unchanged as the first BWP, and the terminal device performs data transmission only once on the second BWP. In this way, after completing the transmission of data, the terminal device may continue to perform subsequent communication on the first BWP.

In another possible implementation, the terminal device may adaptively switch the currently activated BWP during the process of responding to the first information. Specifically, the terminal device may perform the switching of the activated BWP twice. In a first switching, the activated BWP may be switched from the first BWP to the second BWP. In a second switching, the terminal device may actively switch the activated BWP from the second BWP to the original first BWP, so that the terminal device may resume subsequent communication on the first BWP that is originally activated.

It is to be noted that, the operation that the terminal device, after completing the communication on the second BWP, resumes communication on the original first BWP, may be actively operated by the terminal device, rather than indicated or scheduled by the network device.

It can be seen that the terminal device may, under the indication of the network device, multiplex the second BWP where the special signal is located to perform communication, and resume communication on the first BWP that is originally activated after the communication is completed. In this way, the BWP where the special signal is located is fully used to improve the resource utilization rate, and it is also possible to avoid restrictions imposed when the terminal device performs communication on the second BWP.

In an embodiment of the disclosure, as illustrated in FIG. 6, the operation that the terminal device performs communication on the second BWP in the operation 420 may be implemented in the following manner.

In operation 420a, the terminal device switches the activated BWP from the first BWP to the second BWP.

Herein, the terminal device may perform communication on the second BWP.

It is to be understood that, after receiving the first information, the terminal device may switch the activated BWP from the first BWP to the second BWP, and use the second BWP as the activated BWP for terminal device. The terminal device may, as indicated by the first information, perform communication with the network device on the second BWP.

In an embodiment of the disclosure, the terminal device may perform RF retuning and/or baseband parameter reconfiguration in the process of switching from the first BWP to the second BWP. The radio frequency resource is switched from the first BWP to the second BWP, and the second BWP is used as the activated BWP. In this way, the terminal device may perform communication on the second BWP.

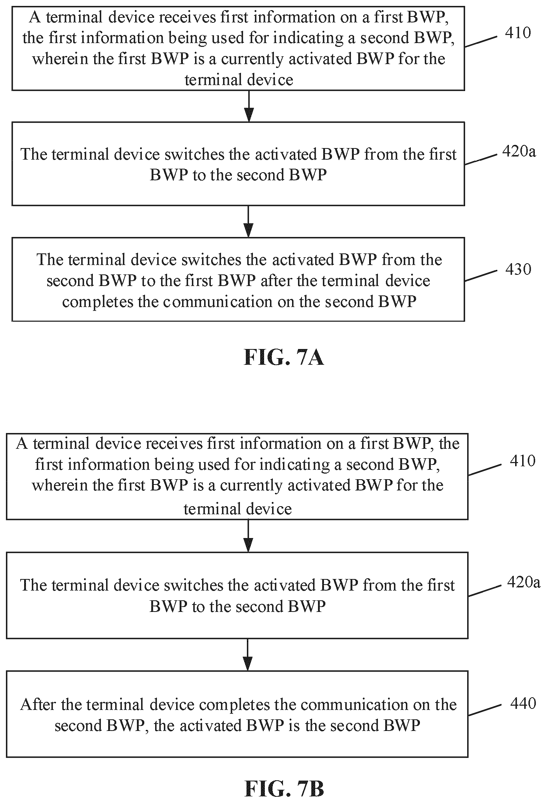

Optionally, as illustrated in FIG. 7A, after the operation 420a, the method for wireless communication according to an embodiment of the disclosure may further include the following operation.

In operation 430, the terminal device switches the activated BWP from the second BWP to the first BWP after the terminal device completes the communication on the second BWP.

It is to be understood that the terminal device may perform the switching of the activated BWP twice after receiving the first information. Herein, in a first switching, the terminal device may, based on the first information, switch the activated BWP from the first BWP to the second BWP, and the second BWP is used as the activated BWP for terminal device, so that the terminal device may perform communication on the activated second BWP. In a second switching, the terminal device may actively switch the activated BWP from the second BWP to the original first BWP, and the original first BWP is used as the activated BWP for terminal device, so that the terminal device and the network device may perform subsequent resource scheduling based on the first BWP that is originally activated.

It is worth noting that in the above-mentioned second switching, the terminal device may make independent decision and actively switch the activated second BWP back to the first BWP that is originally used. That is to say, in an embodiment of the disclosure, in the second switching, the terminal device may switch the activated BWP back to the first BWP that is originally used, without the indication of the signaling. In this way, the terminal device and the network device may perform subsequent resource scheduling based on the original first BWP.

Herein, the operation that the terminal device, in the second switching, switches the activated BWP from the second BWP to the first BWP is implemented after the terminal device completes the communication on the second BWP.

In some embodiments, the first information may be used only for indicating the second BWP, and the resource scheduling for the terminal device to perform data transmission on the second BWP may be implemented through other information. For example, the terminal device may receive DCI 1 (i.e., the first information) and DCI 2. The DCI 1 may indicate the second BWP, and the DCI 2 may indicate that the transmission of the PDSCH is performed on a first time-frequency resource of the second BWP. Based on this, the terminal device may determine the second BWP based on the DCI 1, and determine based on the DCI 2 that the transmission of the scheduled PDSCH is performed on the first time-frequency resource of the second BWP.

In some embodiments, the first information may be used for indicating not only the second BWP, but also the transmission of the first data on the first time-frequency resource of the second BWP. That is to say, the first information may indicate the BWP switching and the cross-BWP scheduling. For example, the first information may include the BWP indication information and the resource indication information. The BWP indication information may indicate the second BWP, and the resource indication information may indicate the first time-frequency resource of the second BWP. Herein, in the first information, the BWP indication information indicates the BWP switching, at the same time, the resource scheduling information indicates a frequency domain resource on a new BWP after the BWP switching. That is to say, the BWP switching and the cross-BWP scheduling are performed simultaneously as indicated by the first information.

In some embodiments, the first information may be the scheduling DCI. The scheduling DCI may indicate the second BWP, and the first time-frequency resource, on which the transmission of the first data is performed, of the second BWP. Alternatively, the scheduling DCI may indicate only the second BWP, and is not used for scheduling data. The content indicated by the scheduling DCI is not limited in the embodiments of the disclosure.

Optionally, in a case where the first information indicates the transmission of the first data on the first time-frequency resource of the second BWP, the operation that the terminal device completes the communication on the second BWP may include: the terminal device completes the transmission of the first data on the first time-frequency resource of the second BWP. That is to say, the terminal device actively switches the activated BWP from the second BWP to the first BWP after the terminal device completes the transmission of the data scheduled by the first information on the second BWP. In this way, the terminal device may use the second BWP for data transmission, thereby improving the resource utilization rate. Moreover, after the terminal device completes the communication on the second BWP, the terminal device may switch from the activated BWP to the original first BWP, without having to perform subsequent resource scheduling on the second BWP. In this way, additional restrictions are avoided to be imposed on the terminal device on the second BWP where the special signal is located, thereby ensuring a normal data interaction between the network device and the terminal device.

In some embodiments, the terminal device may immediately switches the activated BWP from the second BWP to the original first BWP after the terminal device completes the communication on the second BWP.

In other embodiments, the terminal device may be configured with a timer. The terminal device may start the timer when the activated BWP is switched from the first BWP to the second BWP. Alternatively, the terminal device may start the timer after the terminal device completes the transmission on the second BWP, and the terminal device may switch the activated BWP from the second BWP to the first BWP when the timer expires, and use the first BWP as the activated BWP for the terminal device again.

It is to be noted that, the timer may be configured by the network device, or pre-configured, or agreed upon in the protocol, or set by the terminal device itself, which is not limited in the embodiments of the disclosure.

In some embodiments, in the operation 420a and the operation 430, the terminal device may perform the transmission of the first data on the second BWP. Accordingly, the terminal device may perform, through either the first BWP or the second BWP, the transmission of feedback information for the first data transported on the second BWP.

Herein, the feedback information may be hybrid automatic repeat request (HARQ) information, or other types of feedback information, which is not limited in the embodiments of the disclosure.

In one possible implementation, the terminal device may actively switches the activated BWP from the second BWP to the original first BWP after the terminal device completes the communication on the second BWP. The terminal device may choose to perform feedback after the activated BWP is switched from the second BWP to the first BWP. Specifically, the terminal device may perform the transmission of the feedback information for the first data on the original first BWP after switching back is performed thereto.

In another possible implementation, the terminal device may also choose to perform feedback to the received first information before the activated BWP is switched from the second BWP to the first BWP, so that the terminal device may perform the transmission of the feedback information for the first data on the second BWP.

It is to be noted that, the terminal device may choose any of the above methods to transmit the feedback information for the data, which is not limited in the embodiments of the disclosure.

It is to be understood that the first BWP and the second BWP may include only the downlink BWP; or the first BWP and the second BWP may include pairs of uplink BWP and downlink BWP. For example, for the FDD system, the first BWP and the second BWP may include only the downlink BWP. For the TDD system, the first BWP and the second BWP may include pairs of uplink BWP and downlink BWP. It is to be noted that, the BWP indicated by the BWP indication information corresponds to the uplink BWP and the downlink BWP, and both the uplink BWP and the downlink BWP are in the active state at the same time.

In an embodiment of the disclosure, the first BWP and the second BWP may include pairs of uplink BWP and downlink BWP. In this way, the terminal device may perform the transmission of the feedback information for the foregoing data on the uplink BWP corresponding to the first BWP. Alternatively, the terminal device may perform the transmission of the feedback information for the foregoing data on the uplink BWP corresponding to the second BWP.

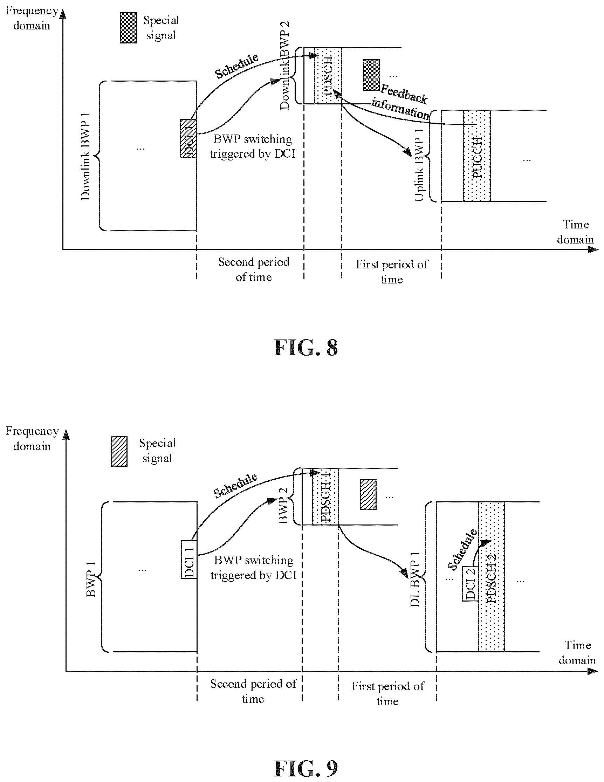

For example, as illustrated in FIG. 8, in the TDD system, the terminal device may receive DCI 1 (i.e., the first information) on the downlink BWP 1. The BWP indication information in the DCI 1 indicates the downlink BWP 2, and the resource scheduling information is used to schedule the PDSCH 1 in the BWP 2. The terminal device performs the RF retuning and/or the baseband parameter reconfiguration after the terminal device receives the DCI 1. The currently activated BWP for the terminal device may be switched to the downlink BWP 2 after a first processing time delay. The terminal device receives PDSCH 1 on the downlink BWP 2. Since the downlink BWP 1 has a corresponding uplink BWP 1, the terminal device automatically switches the activated BWP to the uplink BWP 1 after the transmission of the PDSCH 1 is completed. The terminal device may perform the transmission of the HARQ information for the first data on the PUCCH of the uplink BWP 1 after a second switching time delay.

In practical applications, it takes a certain amount of time for the terminal device to perform the RF retuning and/or the baseband parameter reconfiguration, during which the terminal device is unable to perform normal transmitting and receiving operations.

It is to be understood that the RF retuning time may include the time taken for receiving the first information, the time taken for retuning the frequency point and the RF bandwidth, and the time required for adjusting devices such as analog to digital converter (ADC), digital to analog converter (DAC), automatic gain control (AGC), etc. Table 2 illustrates the values of the RF retuning time under different conditions.

**Table 2**

| | | RF retuning time | Corresponding number of symbols (normal cyclic prefix) | |
|---|---|---|---|---|
| | | | Subcarrier spacing of 30 kHz | Subcarrier spacing of 60 kHz |
| Intra-band operation | The central frequency point remains unchanged, only the bandwidth is changed | 20 µs | about 1 symbol | about 2 symbols |
| | The central frequency point is changed | 50 - 200 µs | about 2 - 6 symbols | about 3 - 12 symbols |
| Inter-band operation | | 900 µs | about 26 symbols | about 51 symbols |

As can be seen from Table 2, if the BWP switching is performed in the current band, in a case where the central frequency point remains unchanged and only the bandwidth is changed, the RF retuning time may be 20 microseconds (µs), and the corresponding number of time domain symbols is about 1 time domain symbol when the subcarrier spacing is 30 kHz, and is about 2 time domain symbols when the subcarrier spacing is 60 kHz. If the BWP switching is performed in the band and the center frequency point is changed, the time required for the RF retuning is 50 - 200 µs, and the corresponding number of time domain symbols is about 2 - 6 time domain symbols when the subcarrier spacing is 30 kHz, and is about 3 - 12 time domain symbols when the subcarrier spacing is 60 kHz. If the BWP switching is performed in other bands, that is, inter-band operation, the RF retuning time is 900 µs, and the corresponding number of time domain symbols is about 26 time domain symbols when the subcarrier spacing is 30 kHz, and is about 51 time domain symbols when the subcarrier spacing is 60 kHz.

It is to be noted that, during the process that the terminal device switches the activated BWP from the first BWP to the second BWP, there is a time interval between the terminal device performs communication on the first BWP and the terminal device performs communication on the second BWP, and the terminal device is unable to perform transmitting and receiving operations during the time interval. Based on this, in an embodiment of the disclosure, the operation that the terminal device performs communication on the second BWP in the operation 420 may be implemented in the following manner.

The terminal device performs the communication on the second BWP after a second period of time.

Herein, the second period of time may include a period of time during which the terminal device switches from the first BWP to the second BWP.

That is to say, the second period of time includes at least the period of time during which the terminal device switches from the first BWP to the second BWP. In other words, the second period of time may include the time interval between the terminal device performs communication on the first BWP and the terminal device performs communication on the second BWP, as described above.

In an embodiment of the disclosure, the second period of time that is experienced by the terminal device may include a period of time from not performing communication by the terminal device on the first BWP to performing communication by the terminal device on the second BWP.

The terminal device may avoid the second period of time during which the transmitting and receiving operations are not performed. That is to say, the terminal device may not perform the transmission of data during the second time period. After the second period of time, the terminal device performs the communication on the second BWP, so as to avoid the problem of data loss caused since the terminal device is unable to perform transmitting and receiving operations during the second period of time, thereby ensuring that the transmission of data is performed correctly.

Optionally, the operation that the terminal device does not perform the transmission of data may include that the terminal device does not receive specified data. For example, the specified data may be PDSCH, PDCCH, etc., which is not limited in the embodiments of the disclosure. Alternatively, the operation that the terminal device does not perform the transmission of data may include that: the terminal device does not demodulate or decode the received information, or the terminal device does not perform operations on the received information other than demodulating or decoding, or the terminal device treats the received data as an error case, which is not limited in the embodiments of the disclosure.

Furthermore, the network device may avoid performing data interaction with the terminal device during the second period of time. Specifically, the network device may, based on the time duration in Table 2, determine the period of time during which the terminal device performs the RF retuning and/or the baseband parameter reconfiguration, and avoid scheduling data in the second period of time for the terminal device.

Optionally, the second period of time may be indicated by the first information. For example, the first information may include a time-delay indicator, through which the second period of time is indicated.

Furthermore, the terminal device may begin to perform the communication on the second BWP after the second period of time. Taking the downlink scheduling as an example, as illustrated in FIG. 9, the terminal device receives DCI 1 (i.e., the first information) on a BWP 1. The BWP indication information in the DCI 1 indicates a BWP 2, and the resource scheduling information in the DCI 1 may indicate a PDSCH 1. The terminal device may, as indicated by the DCI 1, perform the RF retuning and/or the baseband parameter reconfiguration after the terminal device receives the DCI 1, and switch from the activated BWP 1 to the BWP 2 after the second period of time. It can be seen that after the second period of time, the terminal device may receive the PDSCH 1 scheduled by the DCI 1 on the time-frequency resource of the BWP 2.

It is to be noted that, during the process that the terminal device switches the activated BWP from the second BWP to the first BWP after the terminal device completes the communication on the second BWP, the terminal device is required to perform the RF retuning and/or the baseband parameter reconfiguration again to switch the RF resource from the second BWP to the original first BWP, so that the terminal device resumes communication on the first BWP.

It is to be understood that the terminal device is unable to perform normal transmitting and receiving operations during performing the RF retuning and/or the baseband parameter reconfiguration by the terminal device. That is to say, during the process that the terminal device switches the activated BWP from the second BWP to the first BWP, there is a time interval between the terminal device performs communication on the second BWP and the terminal device performs communication on the first BWP, and the terminal device is unable to perform transmitting and receiving operations during the time interval.

Based on this, after the transmission on the second BWP is completed, the terminal device may resume communication on the first BWP after a first period of time. The first period of time may include a period of time during which the terminal device switches the activated BWP from the second BWP to the first BWP.

It is to be understood that, the first period of time may include at least a period of time consumed by the terminal device to switch the activated BWP from the second BWP to the first BWP.

That is to say, the first period of time includes at least the period of time during which the terminal device switches from the second BWP to the first BWP. The first period of time may be the time interval between the terminal device performs communication on the second BWP and the terminal device performs communication on the first BWP. It is also to be understood that, the first period of time that is experienced may be a period of time from not performing communication by the terminal device on the second BWP to performing communication by the terminal device on the first BWP.

The terminal device may avoid the first period of time during which the second BWP is switched to the first BWP, and the terminal device does not perform the transmission of data during the first time period. After the first period of time, the terminal device may resume the communication on the first BWP, so as to avoid the problem of data loss caused since the terminal device is unable to perform transmitting and receiving operations during the first period of time, thereby ensuring that the transmission of data is performed correctly.

Herein, the operation that the terminal device does not perform the transmission of data may include that the terminal device does not receive specified data. For example, the specified data may be PDSCH, PDCCH, etc., which is not limited in the embodiments of the disclosure. Alternatively, the operation that the terminal device does not perform the transmission of data may include that: the terminal device does not demodulate or decode the received information, or the terminal device does not perform operations on the received information other than demodulating or decoding, or the terminal device treats the received data as an error case, which is not limited in the embodiments of the disclosure.

It is to be understood that, in the operation 4, the terminal device may complete the switching of the BWP twice, and thus, the terminal device may not receive data during the first period of time and the second period of time.

As illustrated in FIG. 9, taking the downlink scheduling as an example, the terminal device receives DCI 1 (i.e., the first information) on the BWP 1. The BWP indication information in the DCI 1 indicates the BWP 2, and the resource scheduling information in the DCI 1 may indicate the PDSCH 1. The terminal device may, as indicated by the DCI 1, perform the RF retuning and/or the baseband parameter reconfiguration after the terminal device receives the DCI 1, and switch from the activated BWP 1 to the BWP 2 after the second period of time. The terminal device may receive the PDSCH 1 scheduled by the DCI 1 on the time-frequency resource of the BWP 2. After the reception of the PDSCH 1 is completed, the terminal device may actively perform the RF retuning and/or the baseband parameter reconfiguration, and switch the activated BWP 2 to the BWP 1 after the first period of time. Herein, the second BWP switching does not require indication from an instruction, and after the reception of the PDSCH 1 is completed, the BWP 2 is switched automatically to the BWP 1. In this way, the terminal device may continue to receive the DCI 2 and the PDSCH 2 scheduled by the DCI 2 on the BWP 1.

In some embodiments, the network device may avoid scheduling resources for the terminal device on time domain resources in the first period of time and the second period of time. It is to be understood that when the network device performs the cross-BWP scheduling, the network device may, according to the requirements shown in Table 2, avoid scheduling time domain resources in the period of time during which the terminal device performs the RF retuning and/or the baseband parameter reconfiguration.

In some embodiments, if the terminal device receives scheduling information for the time domain resource in the first period of time and/or the second period of time from the network device, the terminal device may treat the scheduling information as an error case and may not respond to the scheduling information. For example, the terminal device may not receive the PDSCH scheduled by the network device.

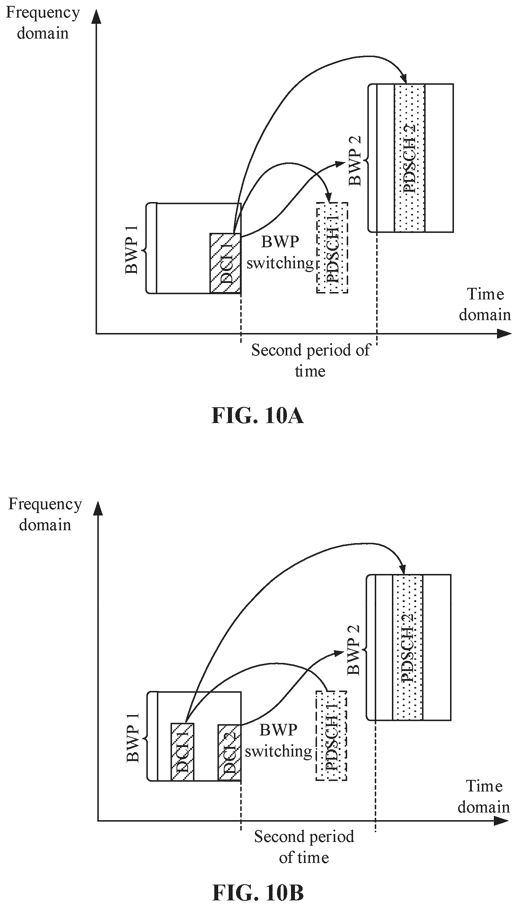

Taking the downlink scheduling as an example, as illustrated in FIG. 10A, the terminal device may receive DCI 1 (i.e., the first information) on a BWP 1. The DCI 1 includes BWP indication information, and the BWP indication information indicates a BWP 2. The DCI 1 also includes resource scheduling information used to schedule a PDSCH 1 and a PDSCH 2, respectively. Herein, the time-frequency resource of the PDSCH 1 is located in the second period of time, and the time-frequency resource of the PDSCH 2 is located in a time domain subsequent to the switching to the BWP 2. After the terminal device receives the DCI 1, the time delay during which the terminal device switches from the BWP 1 to the BWP 2 to perform the RF retuning and/or the baseband parameter reconfiguration is the second period of time. It can be seen that since the time domain resource of the PDSCH 1 is located in the second period of time, the terminal device may treat the resource scheduling information for scheduling the PDSCH 1 as an error case. The PDSCH 2 scheduled by the DCI 1 arrives after the second period of time, thus the terminal device may receive the PDSCH 2 normally.

As illustrated in FIG. 10B, the terminal device may receive DCI 1 and DCI 2 on a BWP 1. The DCI 1 includes resource scheduling information, and the resource scheduling information may indicate a PDSCH 1 and a PDSCH 2. The DCI 2 may include BWP indication information, and the BWP indication information may indicate a BWP 2. After the terminal device receives the DCI 2, the time delay during which the terminal device switches from the BWP 1 to the BWP 2 to perform the RF retuning and/or the baseband parameter reconfiguration is the second period of time. The PDSCH 1 is located in the second period of time, and the PDSCH 2 is located a time domain subsequent to switching to the BWP 2. The terminal device may treat the resource scheduling information for scheduling the PDSCH 1 in the DCI 1 as an error case. For the PDSCH 2, the terminal device may receive it normally.

Optionally, as illustrated in FIG. 7B, after the operation 420a, the method for wireless communication according to an embodiment of the disclosure may further perform the following operation.

In operation 440, after the terminal device completes the communication on the second BWP, the activated BWP is the second BWP.

It is to be understood that in the operation 430, the terminal device is required to perform the RF retuning and/or the baseband parameter reconfiguration twice. The terminal device is unable to transmit and receive during the two processing time delays, resulting in a certain amount of time-delay overhead. Based on this, in the embodiment of the disclosure, in the operation 440, when there is no data transmission for the terminal device in a target time duration after the time domain resource at which the transmission of the first data is performed, the terminal device may perform the switching of the activated BWP only once. In other words, after the terminal device switches the activated BWP from the first BWP to the second BWP, the terminal device may maintain the activated BWP unchanged.

That is to say, the terminal device receives first information on the first BWP, and the first information indicates the second BWP. The terminal device switches the activated BWP from the first BWP to the second BWP based on the first information. In this way, the terminal device performs the communication on the second BWP, and continues to use the second BWP as the activated BWP after the communication on the second BWP is completed, so as to avoid unnecessary BWP switching.

In some embodiments, the first information is further used for indicating transmission of the first data on the first time-frequency resource of the second BWP. Based on this, the operation that the terminal device completes the communication on the second BWP may include the terminal device completes the transmission of the first data on the first time-frequency resource of the second BWP.

That is to say, after the terminal device completes the transmission of the first data on the first time-frequency resource, the activated BWP is still the second BWP.

In an embodiment of the disclosure, the first information may be the scheduling DCI. The scheduling DCI may indicate the second BWP, and the first time-frequency resource, on which the transmission of the first data is performed, of the second BWP. Alternatively, the scheduling DCI may indicate only the second BWP, and is not used for scheduling data. The content indicated by the scheduling DCI is not limited in the embodiments of the disclosure.

In some embodiments, in the operation 420a and the operation 440, the terminal device may perform the transmission of the first data on the second BWP. Accordingly, the terminal device may perform, through the second BWP, the transmission of feedback information for the first data transported on the second BWP.

It is to be understood that the terminal device may switch the activated BWP from the first BWP to the second BWP according to the first information. The terminal device still uses the second BWP as the activated BWP after the terminal device completes the transmission of the first data on the first time-frequency resource of the second BWP. Therefore, in the present embodiment, the terminal device may perform the transmission of the feedback information for the first data by using the activated second BWP.

It is to be understood that the first BWP and the second BWP may include only the downlink BWP; or the first BWP and the second BWP may include pairs of uplink BWP and downlink BWP. That is to say, the BWP indicated by the BWP indication information corresponds to the uplink BWP and the downlink BWP, and both the uplink BWP and the downlink BWP are in the active state at the same time. For example, for the FDD system, the first BWP and the second BWP may include only the downlink BWP. For the TDD system, the first BWP and the second BWP may include pairs of uplink BWP and downlink BWP.

It is to be noted that, in a case where the second BWP may include pairs of uplink BWP and downlink BWP, the terminal device may perform the transmission of the feedback information for the foregoing data on the uplink BWP corresponding to the second BWP.

In an embodiment of the disclosure, the terminal device may include a primary receiver and a secondary receiver.

It is to be understood that the primary receiver may be a common receiver in the terminal device. The secondary receiver may be a receiver with low-cost, low-complexity, and low-power. Optionally, the primary receiver may receive data with a larger frequency domain bandwidth, while the secondary receiver, due to limitations on cost and complexity, may receive data with a smaller frequency domain bandwidth.

For example, the secondary receiver may be configured to receive the special signals in the embodiments described above, such as the WUS, the energy saving signal, the paging signal, etc. The special signal in the embodiment of the disclosure may be used to wake up the primary receiver.

In an embodiment of the disclosure, the method for wireless communication according to an embodiment of the disclosure may further include the following operation.

The terminal device turns off the primary receiver based on the first information.

In the embodiment of the disclosure, the first information may be received by the primary receiver of the terminal device. The first information may indicate the second BWP, and the second BWP is different from the first BWP.

It is to be noted that the second BWP is a special BWP. When the terminal device determines that the BWP indicated by the BWP indication information in the first information is the special second BWP, the terminal device may actively turn off the primary receiver and use only the secondary receiver for communication to save power.

For example, the terminal device may store a list of identification information of the special BWPs. If the terminal device determines that the identification information of the BWP indicated by the first information is included in the list of identification information of the special BWPs, the terminal device actively turns off the primary receiver and communicates through the secondary receiver.

Optionally, based on the above embodiments, the method for wireless communication according to an embodiment of the disclosure may further include the following operation.

The terminal device receives second information through the secondary receiver, and the second information indicates waking up of the primary receiver.

It is to be understood that after the terminal device turns off the primary receiver, the terminal device may receive information through the secondary receiver to reduce the power consumption of the terminal device.

When the network device is required to wake up the primary receiver of the terminal device, the network device may transmit second information to the terminal device. In this way, the terminal device receives the second information through the secondary receiver that is currently operating, and the terminal device may, as indicated by the second information, wake up the primary receiver. In this way, the primary receiver may resume to transmit and receive data/information.

In some embodiments, the second information may be control information, such as DCI; or the second information may be the special signal in the embodiments described above, which is not limited in the embodiments of the disclosure.

Optionally, the second information may be received on the second BWP. It is to be understood that, the terminal device may transmit and receive data/information on the second BWP after the terminal device turns off the primary receiver.

It is to be noted that, in an embodiment of the disclosure, the operation that the terminal device turns off the primary receiver may be considered as: the terminal device switches from the activated first BWP to the second BWP. The operation that the terminal device wakes up the primary receiver may be understood as: the terminal device switches the activated BWP from the second BWP to the first BWP.

In one possible implementation, the search space for the PDCCH may be configured on the second BWP. The terminal device may receive control information (e.g., DCI) on the second BWP, and switches to another BWP.

In another possible implementation, the special signal may carry the BWP indication information. The special signal may implement the BWP switching while waking up the primary receiver of the terminal device. For example, when the terminal device has the demand for downlink data transmission, the network device may transmit a special signal to indicate the terminal device to wake up the primary receiver. Moreover, the special signal may include BWP indication information for switching the activated BWP to the first BWP with large bandwidth for data transmission.

In summary, in an embodiment of the disclosure, the terminal device may, according to the first information, switch the activated BWP from the first BWP to the second BWP, and perform the communication on the second BWP. After the terminal device completes the communication on the second BWP, the terminal device may actively switch the activated BWP from the second BWP back to the original first BWP, or the terminal device may maintain the second BWP as the activated BWP unchanged.

In some embodiments, the first information may further indicate whether to switch the activated BWP from the second BWP to the first BWP after the terminal device completes the communication on the second BWP.

It is to be understood that, the terminal device may, according to the first information, determine whether to execute the operation 430 or the operation 440 after the operation 420a. That is to say, the terminal device may, according to the first information, determine whether the terminal device switches the activated BWP from the second BWP to the first BWP or maintains the second BWP as the activated BWP unchanged, after the terminal device completes the communication on the second BWP,.

It is to be understood that if the network device still has data scheduling for the terminal device in subsequent operations, the network device may, through the first information, indicate the terminal device to switch the activated BWP from the second BWP to the first BWP after the terminal device completes the communication on the second BWP. That is to say, the terminal device may implement the operation 420a and the operation 430 described above.

If the network device does not have data scheduling for the terminal device in subsequent operations, the network device may, through the first information, indicate the terminal device to continue using the second BWP as the activated BWP after the terminal device completes the communication on the second BWP. That is to say, the terminal device may implement the operation 420a and the operation 440 described above.

Optionally, the first information may include a first switching indicator, and the different values of the first switching indicator indicate the terminal device to perform different operations. For example, when the value of the first switching indicator is a first value (for example, 0 or 1), it may indicate the terminal device not to perform the switching of the activated BWP after the terminal device completes the communication on the second BWP. That is to say, the terminal device continues using the second BWP as the activated BWP after the terminal device completes the communication on the second BWP. When the value of the first switching indicator is a second value (for example, 1 or 0), it may indicate the terminal device to perform the switching of the activated BWP after the terminal device completes the communication on the second BWP. That is to say, the terminal device switches from the activated second BWP to the first BWP after the terminal device completes the communication on the second BWP.

In summary, according to actual needs, the network device may indicate, through the first information, whether the terminal device switches the activated BWP from the second BWP back to the original first BWP, which may improve the flexibility of data transmission.

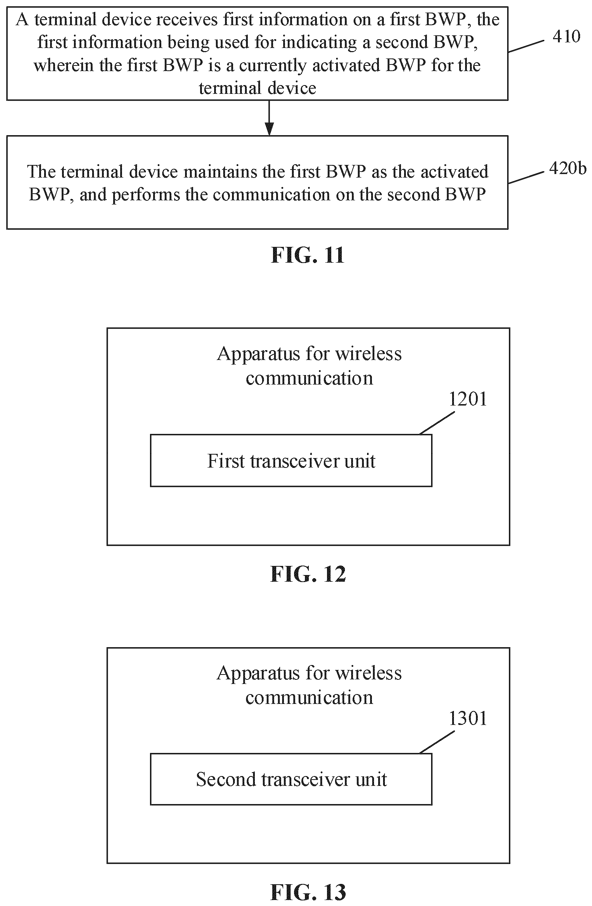

In an embodiment of the disclosure, as illustrated in FIG. 11, the operation that the terminal device performs communication on the second BWP in the operation 420 may further be implemented in the following manner.

In operation 420b, the terminal device maintains the first BWP as the activated BWP, and performs the communication on the second BWP.

In the embodiment of the disclosure, the terminal device may not change the activation state of the currently activated BWP after the terminal device receives the first information. That is to say, the terminal device may maintain the first BWP as the activated BWP after the terminal device receives the first information, and do not perform the switching of the activated BWP in the process of responding to the first information.

It is to be understood that the terminal device may maintain the first BWP as the activated BWP unchanged after the terminal device receives the first information. The terminal device may, as indicated by the first information, perform communication with the terminal device on the second BWP.

Optionally, the first information is further used for indicating transmission of the first data on the first time-frequency resource of the second BWP. Based on this, the operation that the terminal device performs the communication on the second BWP may include the terminal device performs the transmission of the first data on the first time-frequency resource of the second BWP.

It is to be understood that in the operation 420b, although the activated BWP for the terminal device has not been changed, the underlying hardware of the terminal device is still required to perform the switching of the RF resource twice. In a first switching of the RF resource, the terminal device may perform the RF retuning and/or the baseband parameter reconfiguration, so as to prepare for the terminal device to perform the communication on the second BWP, and switch the RF resource from the first BWP to the second BWP. In this way, the terminal device may perform the transmission of the first data on the first time-frequency resource of the second BWP. In a second switching of the RF resource, the terminal device may perform the RF retuning and/or the baseband parameter reconfiguration again, so as to switch the RF resource from the second BWP to the first BWP.

It is to be noted that the terminal device is unable to perform normal transmitting and receiving operations as well during performing the RF retuning and/or the baseband parameter reconfiguration twice as described above.

Based on this, in the operation 420b, the operation that the terminal device performs the communication on the second BWP may include that the terminal device performs the communication on the second BWP after the second period of time. Herein, the second period of time may include at least a period of time during which the terminal device switches the RF resource from the first BWP to the second BWP, and may also be referred to as a period of time during which the terminal device prepares to perform the transmission of data on the second BWP.

That is to say, the terminal device may avoid the second period of time, and the terminal device may not perform the transmission of data during the first time period. After the second period of time, the terminal device performs the communication on the second BWP, so as to avoid the problem of data loss caused since the terminal device is unable to perform transmitting and receiving operations during the second period of time, thereby ensuring that the transmission of data is performed correctly.

In addition, in the operation 420b, after the terminal device completes the transmission of the first data on the second BWP, the terminal device may resume communication on the first BWP only after the first period of time. The first period of time may include at least a period of time during which the terminal device switches the RF resource from the second BWP to the first BWP, and may also be referred to as a period of time during which the terminal device prepares to perform the transmission of data on the first BWP.

Likewise, the terminal device may avoid the first period of time, and the terminal device may not perform the transmission of data during the first time period. After the first period of time, the terminal device may resume the communication on the first BWP, so as to avoid the problem of data loss caused since the terminal device is unable to perform transmitting and receiving operations during the first period of time, thereby ensuring that the transmission of data is performed correctly.

It is to be noted that, in some embodiments, in a case where the terminal device receives the first information, maintains the first BWP as the activated BWP and performs the communication on the second BWP in the operation 420b, the terminal device may maintain the primary receiver on, so that the terminal device may continue to transmit and receive data/information through the primary receiver after the terminal device performs, through the secondary receiver, the transmission of the data scheduled by the first information. In other embodiments, in the case where the terminal device receives the first information, maintains the first BWP as the activated BWP and performs the communication on the second BWP in the operation 420b, the terminal device may: turn off the primary receiver and turn on the secondary receiver when the terminal device switches the RF resource from the first BWP to the second BWP, and turn off the secondary receiver and turn on the primary receiver when the terminal device switches the RF resource from the second BWP to the first BWP. There is no particular limitation on this aspect in the embodiments of the disclosure.

In some embodiments, in the operation 420b, the terminal device may perform the transmission of the first data on the second BWP. Herein, the terminal device may perform, through either the first BWP or the second BWP, the transmission of feedback information for the first data transported on the second BWP.

It is to be understood that in an embodiment of the disclosure, the terminal device may perform the transmission of feedback information for the data on the second BWP before the terminal device performs the second switching of the RF resource. Alternatively, the terminal device may perform the transmission of feedback information for the data on the activated first BWP after the terminal device completes the second switching of the RF resource, which is not limited in the embodiments of the disclosure.

It is to be noted that, the terminal device may choose any of the above methods to transmit the feedback information for the data, which is not limited in the embodiments of the disclosure.

It is to be understood that the first BWP and the second BWP may include only the downlink BWP; or the first BWP and the second BWP may include pairs of uplink BWP and downlink BWP. That is to say, the BWP indicated by the BWP indication information corresponds to the uplink BWP and the downlink BWP, and both the uplink BWP and the downlink BWP are in the active state at the same time. For example, for the FDD system, the first BWP and the second BWP may include only the downlink BWP. For the TDD system, the first BWP and the second BWP may include pairs of uplink BWP and downlink BWP.

It is to be noted that the first BWP and the second BWP may include pairs of uplink BWP and downlink BWP. In this way, the terminal device may perform the transmission of the feedback information for the foregoing data on the uplink BWP corresponding to the first BWP. Alternatively, the terminal device may perform the transmission of the feedback information for the foregoing data on the uplink BWP corresponding to the second BWP.

In some embodiments, the first information may further indicate whether to switch the activated BWP from the first BWP to the second BWP.

That is to say, the terminal device may, according to the first information, execute the operation 420a, or the operation 420b. That is to say, the first information may indicate, after the terminal device receives the first information, whether the terminal device switches the activated BWP from the first BWP to the second BWP and performs the communication on the second BWP, or maintains the first BWP as the activated BWP and performs the communication on the second BWP.

Optionally, the first information may include a second switching indicator, and the different values of the second switching indicator indicate the terminal device to perform different operations. For example, when the value of the second switching indicator is a first value (for example, 0 or 1), it may indicate the terminal device to switch the activated BWP to the second BWP. When the value of the first switching indicator is a second value (for example, 0 or 1), it may indicate the terminal device to maintain the first BWP as the activated BWP unchanged.

In some embodiments, the first information may indicate both whether to switch the activated BWP from the first BWP to the second BWP, and whether to switch the activated BWP from the second BWP to the first BWP after the terminal device completes the communication on the second BWP. That is to say, the first information may include the first switching indicator and the second switching indicator.

For example, in a case where the value of the second switching indicator is the first value and the value of the first switching indicator is the first value, the terminal device may determine that the activated BWP is switched to the second BWP for communication, and after the terminal device completes the communication on the second BWP, the terminal device does not perform the switching of the activated BWP and continues using the second BWP as the activated BWP. In a case where the value of the second switching indicator is the first value and the value of the first switching indicator is the second value, the terminal device may determine that the activated BWP is switched to the second BWP for communication, and after the terminal device completes the communication on the second BWP, the terminal device actively switches the activated BWP back to the original BWP. In addition, in a case where the value of the second switching indicator is the second value and the value of the first switching indicator is the first value or the second value, the terminal device may determine to maintain the first BWP as the activated BWP unchanged, and perform the communication only on the second BWP.

The preferred implementations of the disclosure have been described in detail as above with reference to the accompanying drawings. However, the disclosure is not limited to the specific details in the above implementations. Within the scope of the technical concept of the disclosure, various simple modifications may be made to the technical solutions of the disclosure, and all these simple modifications belong to the scope of protection of the disclosure. For example, various specific technical features described in the above specific implementations may be combined in any suitable manner without contradiction. In order to avoid unnecessary repetition, various possible combination manners will not be described any more in the disclosure. For another example, various different implementations of the disclosure may also be combined arbitrarily, as long as they do not depart from the idea of the disclosure, which should also be considered as the contents disclosed in the disclosure. For another example, provided that there is no conflict, the embodiments and/or technical features within the embodiments described in the disclosure may be arbitrarily combined with related art. The technical solutions obtained after the combination should also fall within the scope of protection of the disclosure.

It should further be understood that, in various method embodiments of the disclosure, the values of the sequence numbers of the aforementioned processes do not imply the sequence of execution. The sequence of execution of the processes should be determined based on functions thereof and inherent logics, and the values of the sequence numbers should not constitute any limitation on the implementation processes of the embodiments of the disclosure. Furthermore, in the embodiments of the disclosure, the terms "downlink", "uplink" and "sidelink" are used to represent a transmission direction of a signal or data. Herein, the "downlink" is used to represent that the transmission direction of the signal or data is a first direction transmitted from a station to a user equipment of a cell; the "uplink" is used to represent that the transmission direction of the signal or data is a second direction transmitted from the user equipment of the cell to the station; and the "sidelink" is used to represent that the transmission direction of the signal or data is a third direction transmitted from a user equipment 1 to a user equipment 2. For example, a "downlink signal" represents that the signal is transmitted in the first direction. In addition, in the embodiments of the disclosure, the term "and/or" merely indicates an association relationship for describing associated objects, and represents that there are three kinds of relationships. Specifically, "A and/or B" may represent three situations, i.e., independent existence of A, existence of both A and B, and independent existence of B. Additionally, the character "/" herein generally represents that the previous and next objects form a kind of "or" relationship.

FIG. 12 is a first schematic diagram of the compositional structure of the apparatus for wireless communication provided in an embodiment of the disclosure, and the apparatus is applied to a terminal device. As illustrated in FIG. 12, the apparatus for wireless communication includes a first transceiver unit 1201.

The first transceiver unit 1201 is configured to receive first information on a first BWP, the first information being used for indicating a second BWP. The first BWP is a currently activated BWP for the terminal device.

The first transceiver unit 1201 is further configured to perform communication on the second BWP.

In some embodiments, the first transceiver unit 1201 may include a switching unit. The switching unit is configured to switch the activated BWP from the first BWP to the second BWP.

In some embodiments, the switching unit is further configured to switch the activated BWP from the second BWP to the first BWP after the communication is completed on the second BWP.

In some embodiments, the first information is further used for indicating transmission of the first data on a first time-frequency resource of the second BWP. The first transceiver unit 1201 may be further configured to complete the transmission of the first data on the first time-frequency resource.

In some embodiments, the first transceiver unit 1201 is further configured to: perform transmission of feedback information for the first data on the first BWP, or perform transmission of the feedback information for the first data on the second BWP.

In some embodiments, the switching unit is further configured to enable the terminal device to switch to the first BWP after a first period of time.

In some embodiments, the terminal device includes a primary receiver and a secondary receiver. The apparatus for wireless communication further includes a control unit configured to turn off the primary receiver according to the first information.

In some embodiments, the first transceiver unit 1201 is further configured to receive second information through the secondary receiver. The second information indicates waking up of the primary receiver.

In some embodiments, the second information is received on the second BWP.

In some embodiments, the first transceiver unit 1201 is further configured to maintain the first BWP as the activated BWP and perform the communication on the second BWP.

In some embodiments, the first information is further used for indicating transmission of the first data on a first time-frequency resource of the second BWP. The first transceiver unit 1201 is further configured to perform the transmission of the first data on the first time-frequency resource of the second BWP.

In some embodiments, the first transceiver unit 1201 is further configured to: perform transmission of feedback information for the first data by the terminal device on the first BWP, or perform transmission of the feedback information for the first data by the terminal device on the second BWP.

In some embodiments, the first information is further used for indicating whether to switch the activated BWP from the first BWP to the second BWP.

In some embodiments, the first information is further used for indicating whether to switch the activated BWP from the second BWP to the first BWP after the communication is completed on the second BWP.

In some embodiments, the second BWP is at least one of: a BWP where the WUS is located, a BWP where the energy saving signal is located, or a BWP where the paging signal is located.

In some embodiments, the first transceiver unit 1201 is further configured to perform the communication on the second BWP after a second period of time. The second period of time is a period of time during which the terminal device switches the activated BWP from the first BWP to the second BWP, or a period of time during which the terminal device prepares to perform the communication on the second BWP.

It is to be understood by those skilled in the art that the related description of the aforementioned apparatus for wireless communication in the embodiments of the disclosure may be understood with reference to the related description of the method for wireless communication in the embodiments of the disclosure.

FIG. 13 is a second schematic diagram of the compositional structure of the apparatus for wireless communication provided in an embodiment of the disclosure, and the apparatus is applied to a network device. As illustrated in FIG. 13, the apparatus for wireless communication includes a second transceiver unit 1301.

The second transceiver unit 1301 is configured to transmit first information to a terminal device on a first BWP, the first information being used for indicating a second BWP. The first BWP is a currently activated BWP for the terminal device.

The second transceiver unit 1301 is further configured to perform communication with the terminal device on the second BWP.

In some embodiments, the apparatus for wireless communication further includes a determining unit configured to determine that the terminal device switches the activated BWP from the first BWP to the second BWP

In some embodiments, the determining unit is further configured to, after the communication with the terminal device is completed on the second BWP, determine that the activated BWP for the terminal device is switched from the second BWP to the first BWP.

In some embodiments, the first information is further used for indicating transmission of the first data on a first time-frequency resource of the second BWP. The first determining unit is further configured to complete the transmission of the first data with the terminal device on the first time-frequency resource.

In some embodiments, the second transceiver unit 1301 is further configured to: perform transmission of feedback information for the first data on the first BWP, or perform transmission of the feedback information for the first data on the second BWP.

In some embodiments, the second transceiver unit 1301 is further configured to, after a first period of time, determine that the terminal device switches to the first BWP.

In some embodiments, the determining unit is further configured to determine that the terminal device maintains the first BWP as the activated BWP.

The second transceiver unit 1301 is further configured to perform the communication with the terminal device on the second BWP.

In some embodiments, the first information is further used for indicating transmission of the first data on a first time-frequency resource of the second BWP. The second transceiver unit 1301 is further configured to perform the transmission of the first data on the first time-frequency resource of the second BWP.

In some embodiments, the second transceiver unit 1301 is further configured to: perform transmission of feedback information for the first data on the first BWP, or perform transmission of the feedback information for the first data on the second BWP.

In some embodiments, the terminal device includes a primary receiver and a secondary receiver. The first information is further used for indicating turning off of the primary receiver.

In some embodiments, the second transceiver unit 1301 is further configured to transmit second information. The second information indicates waking up of the primary receiver.

In some embodiments, transmission of the second information is performed on the second BWP.

In some embodiments, the first information is further used for indicating whether to switch the activated BWP from the first BWP to the second BWP.

In some embodiments, the first information is further used for indicating whether to switch the activated BWP from the second BWP to the first BWP after the communication is completed on the second BWP.

In some embodiments, the second BWP is at least one of: a BWP where the WUS is located, a BWP where the energy saving signal is located, or a BWP where the paging signal is located.

In some embodiments, the second transceiver unit 1301 is further configured to perform communication on the second BWP after a second period of time.

It is to be understood by those skilled in the art that the related description of the aforementioned apparatus for wireless communication in the embodiments of the disclosure may be understood with reference to the related description of the method for wireless communication in the embodiments of the disclosure.

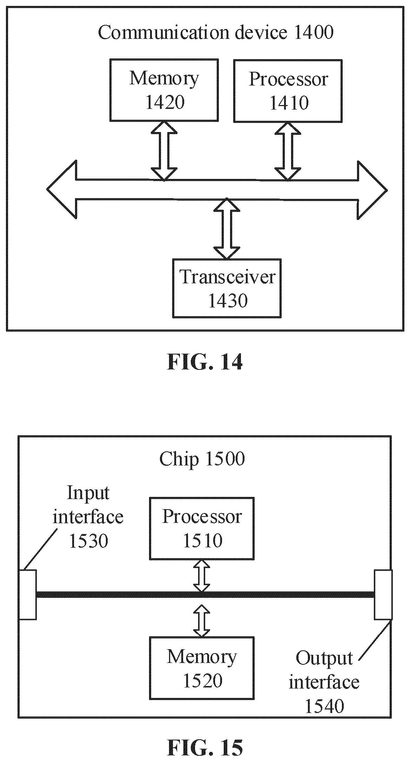

FIG. 14 is a schematic structural diagram of a communication device 1400 according to an embodiment of the disclosure. The communication device may be a terminal device or a network device. The communication device 1400 illustrated in FIG. 14 includes a processor 1410 that may invoke and execute a computer program from a memory to perform each of the methods in the embodiments of the disclosure.

Optionally, as illustrated in FIG. 14, the communication device 1400 may further include a memory 1420. Herein, the processor 1410 may invoke and execute the computer program from the memory 1420 to perform each of the methods in the embodiments of the disclosure.

The memory 1420 may be a separate device independent of the processor 1410, or may be integrated in the processor 1410.

Optionally, as illustrated in FIG. 14, the communication device 1400 may further include a transceiver 1430, and the processor 1410 may control the transceiver 1430 to communicate with other devices. Specifically, the transceiver may transmit information or data to other devices, or receive information or data from other devices.

Herein, the transceiver 1430 may include a transmitter and a receiver. The transceiver 1430 may further include one or more antennas.

Optionally, the communication device 1400 may specifically be the network device in the embodiments of the disclosure, and the communication device 1400 may implement corresponding processes implemented by the network device in each method of the embodiments of the disclosure. For brevity, details will not be repeated herein again.

Optionally, the communication device 1400 may specifically be the mobile terminal/the terminal device in the embodiments of the disclosure, and the communication device 1200 may implement corresponding processes implemented by the mobile terminal/the terminal device in each method of the embodiments of the disclosure. For brevity, details will not be repeated herein again.

FIG. 15 is a schematic structural diagram of a chip according to an embodiment of the disclosure. The chip 1500 illustrated in FIG. 15 includes a processor 1510 that may invoke and execute a computer program from a memory to perform each of the methods in the embodiments of the disclosure.

Optionally, as illustrated in FIG. 15, the chip 1500 may further include a memory 1520. Herein, the processor 1510 may call and execute the computer program from the memory 1520 to perform each of the methods in the embodiments of the disclosure.

The memory 1520 may be a separate device independent of the processor 1510, or may be integrated in the processor 1510.

Optionally, the chip 1500 may further include an input interface 1530. Herein, the processor 1510 may control the input interface 1530 to communicate with other devices or chips. Specifically, the input interface 830 may acquire information or data from other devices or chips.

Optionally, the chip 1500 may further include an output interface 1540. Herein, the processor 1510 may control the output interface 1540 to communicate with other devices or chips. Specifically, the output interface 1540 may output information or data to other devices or chips.

Optionally, the chip may be applied to the network device in the embodiments of the disclosure, and the chip may implement corresponding processes implemented by the network device in each method of the embodiments of the disclosure. For brevity, details will not be repeated herein again.

Optionally, the chip may be applied to the mobile terminal/the terminal device in the embodiments of the disclosure, and the chip may implement corresponding processes implemented by the mobile terminal/the terminal device in each method of the embodiments of the disclosure. For brevity, details will not be repeated herein again.

It is to be understood that the chip mentioned in the embodiments of the disclosure may also be referred to as a system-level chip, a system chip, a chip system, or a system-on-chip, etc.

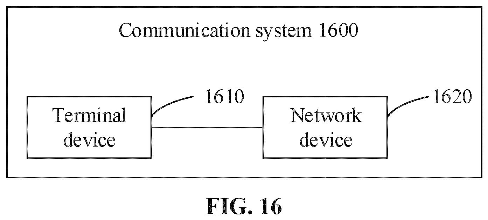

FIG. 16 is a schematic block diagram of a communication system 1600 according to an embodiment of the disclosure. As illustrated in FIG. 16, the communication system 1600 includes a terminal device 1610 and a network device 1620.

The terminal device 1610 may be configured to implement the corresponding functions implemented by the terminal device in the foregoing methods, and the network device 1620 may be configured to implement the corresponding functions implemented by the network device in the foregoing methods. For brevity, details will not be repeated herein again.

It is to be understood that the processor in the embodiment of the disclosure may be an integrated circuit chip with a signal processing capability. In an implementation process, various operations of the aforementioned method embodiments may be completed by an integrated logic circuit of hardware or the instructions in the form of software in the processor. The processor described above may be a general-purpose processor, a digital signal processor (DSP), an application specific integrated circuit (ASIC), a field programmable gate array (FPGA) or another programmable logic device, discrete gate or transistor logic device, or discrete hardware component. Various methods, operations and logic block diagrams disclosed in the embodiments of the disclosure may be implemented or performed. The general-purpose processor may be a microprocessor, or may be any conventional processor or the like. The operations of the methods disclosed in the embodiments of the disclosure may be directly embodied to be executed and completed by a hardware decoding processor, or by a combination of hardware and software modules in the decoding processor. The software module may be located in a mature storage medium in the field, such as a random access memory (RAM), a flash memory, a read-only memory (ROM), a programmable ROM (PROM), or an electrically erasable programmable memory, a register, etc. The storage medium is located in the memory, and the processor reads information in the memory and completes the operations of the foregoing method in combination with its hardware.

It is understood that, in the embodiment of the disclosure, the memory may be a volatile memory or a non-volatile memory, or may include both the volatile memory and the non-volatile memory. The non-volatile memory may be a ROM, a PROM, an Erasable PROM (EPROM), an Electrically EPROM (EEPROM), or a flash memory. The volatile memory may be a RAM, which serves as an external high-speed cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch Link DRAM (SLDRAM) and a Direct Rambus RAM (DR RAM). It is to be noted that the memory of the systems and methods described herein is intended to include, but not limited to, memories of these and any other suitable types.

It is to be understood that the aforementioned memory is described only exemplarily rather than limitedly. For example, the memory in the embodiments of the disclosure may further be an SRAM, a DRAM, an SDRAM, a DDR SDRAM, an ESDRAM, an SLDRAM and a DR RAM, etc. That is, the memory in the embodiments of the disclosure is intended to include, but not limited to, memories of these and any other suitable types.

In the embodiments of the disclosure, a computer-readable storage medium having stored thereon a computer program is further provided.

In an embodiment, the computer-readable storage medium may be applied to the network device in the embodiments of the disclosure, and the computer program is executed to enable a computer to execute corresponding processes implemented by the network device in each of the methods in the embodiments of the disclosure. For brevity, details will not be repeated herein again.

Optionally, the computer-readable storage medium may be applied to the mobile terminal/the terminal device in the embodiments of the disclosure, and the computer program is executed to enable the computer to execute corresponding processes implemented by the mobile terminal/the terminal device in each of the methods in the embodiments of the disclosure. For brevity, details will not be repeated herein again.

In the embodiment of the disclosure, a computer program product having stored therein computer program instructions is further provided.

**In** an embodiment, the computer program product may be applied to the network device in the embodiments of the disclosure, and the computer program instructions cause the computer to execute corresponding processes implemented by the network device in each of the methods in the embodiments of the disclosure. For brevity, details will not be repeated herein again.

Optionally, the computer program product may be applied to the mobile terminal/the terminal device in the embodiments of the disclosure, and the computer program instructions cause the computer to execute corresponding processes implemented by the mobile terminal/the terminal device in each of methods in the embodiments of the disclosure. For brevity, details will not be repeated herein again.

In the embodiment of the disclosure, a computer program is further provided.

In an embodiment, the computer program may be applied to the network device in the embodiments of the disclosure. The computer program, when executed by a computer, causes the computer to execute corresponding processes implemented by the network device in each of methods in the embodiments of the disclosure. For brevity, details will not be repeated herein again.

Optionally, the computer program may be applied to the mobile terminal/the terminal device in the embodiments of the disclosure. The computer program, when executed by a computer, causes the computer to execute corresponding processes implemented by the mobile terminal/the terminal device in each of methods in the embodiments of the disclosure. For brevity, details will not be repeated herein again.

Those of ordinary skilled in the art may appreciate that the units and algorithmic operations of each of the examples described in the embodiments disclosed herein may be implemented in electronic hardware, or a combination of computer software and electronic hardware. Whether these functions are performed in hardware or software depends on the specific application and design constraints of the technical solutions. The professionals may use different methods to implement the described functions for each specific application, and such implementations shall not be considered as going beyond the scope of the disclosure.

Those skilled in the art may clearly understand that, for the specific working processes of the systems, devices, and units described above, reference may be made to the corresponding processes in the aforementioned method embodiments, which will not be repeated herein for convenience and conciseness of the description.

In several embodiments provided in the disclosure, it is to be understood that the disclosed systems, devices, and methods may be implemented in other ways. For example, the device embodiments described above are only schematic. For example, the partition of the unit is only a kind of logical functional partition, and other partition manners may be adopted during practical implementation. For example, multiple units or components may be combined or integrated into another system, or some features may be omitted or not implemented. In addition, coupling or direct coupling or communication connection between various displayed or discussed components may be indirect coupling or communication connection, implemented through some interfaces, devices or units, and may be an electrical or mechanical connection or in other forms.

The units described as separate components may or may not be physically separate, and the components displayed as units may or may not be physical units, that is, may be located in one place or be distributed to multiple network units. Part or all of the units may be selected based on the actual needs to achieve the purpose of the solution of the present embodiment.

Moreover, various functional units in the embodiments of the disclosure may be integrated into one processing unit, or they may be physically exist separately as individual units, or two or more units may be integrated into one unit.

The functions may be stored in a computer readable storage medium if implemented in the form of software functional units and sold or used as a stand-alone product. Based on such understanding, the essential part of the technical solutions of the disclosure or a part of the technical solutions that makes contributions over the related art or the part of the technical solutions may be embodied in a form of a software product. The software product is stored in a storage medium and includes instructions which cause a computer device (which may be a personal computer, a server, or a network device, etc.) to perform all or part of the operations in the methods described in various embodiments of the disclosure. The foregoing storage medium includes various media capable of storing program codes, such as a USB disk, a mobile hard disk, an ROM, an RAM, a magnetic disk, an optical disk, or the like.

The foregoing are only the specific implementations of the disclosure; however, the scope of protection of the disclosure is not limited thereto. Variations or replacements which can be readily conceived by those skilled in the art within the technical scope disclosed by the disclosure shall fall within the scope of protection of the disclosure. Therefore, the scope of protection of the disclosure shall be determined by the scope of protection of the claims.

## Claims

1. A method for wireless communication, comprising:
receiving, by a terminal device, first information on a first bandwidth part, BWP, the first information being used for indicating a second BWP, wherein the first BWP is a currently activated BWP for the terminal device; and
performing, by the terminal device, communication on the second BWP.

2. The method of claim 1, wherein performing, by the terminal device, communication on the second BWP comprises:
switching, by the terminal device, the activated BWP from the first BWP to the second BWP.

3. The method of claim 2, further comprising:
switching, by the terminal device, the activated BWP from the second BWP to the first BWP after the terminal device completes the communication on the second BWP.

4. The method of claim 3, wherein the first information is further used for indicating transmission of first data on a first time-frequency resource of the second BWP, and wherein completing, by the terminal device, the communication on the second BWP comprises:
completing, by the terminal device, the transmission of the first data on the first time-frequency resource.

5. The method of claim 4, further comprising:
performing, by the terminal device, transmission of feedback information for the first data on the first BWP; or
performing, by the terminal device, transmission of the feedback information for the first data on the second BWP.

6. The method of any one of claims 3 to 5, wherein switching, by the terminal device, the activated BWP from the second BWP to the first BWP comprises:
switching, by the terminal device, to the first BWP after a first period of time.

7. The method of claim 1, wherein performing, by the terminal device, the communication on the second BWP comprises:
maintaining, by the terminal device, the first BWP as the activated BWP, and performing, by the terminal device, the communication on the second BWP.

8. The method of claim 7, wherein the first information is further used for indicating transmission of first data on a first time-frequency resource of the second BWP, and wherein performing, by the terminal device, the communication on the second BWP comprises:
performing, by the terminal device, the transmission of the first data on the first time-frequency resource of the second BWP.

9. The method of claim 8, further comprising:
performing, by the terminal device, transmission of feedback information for the first data on the first BWP; or
performing, by the terminal device, transmission of the feedback information for the first data on the second BWP.

10. The method of any one of claims 1 to 9, wherein the terminal device comprises a primary receiver and a secondary receiver, and the method further comprises:
turning off, by the terminal device, the primary receiver based on the first information.

11. The method of claim 10, further comprising:
receiving, by the terminal device, second information through the secondary receiver, wherein the second information indicates waking up of the primary receiver.

12. The method of claim 11, wherein the second information is received on the second BWP.

13. The method of any one of claims 1 to 12, wherein the first information is further used for indicating whether to switch the activated BWP from the first BWP to the second BWP.

14. The method of any one of claims 1 to 13, wherein the first information is further used for indicating whether to switch the activated BWP from the second BWP to the first BWP after the communication is completed on the second BWP.

15. The method of any one of claims 1 to 14, wherein the second BWP comprises at least one of:
a BWP where a wake up signal, WUS, is located, a BWP where an energy saving signal is located, or a BWP where a paging signal is located.

16. The method of any one of claims 1 to 15, wherein performing, by the terminal device, the communication on the second BWP comprises:
performing, by the terminal device, the communication on the second BWP after a second period of time.

17. A method for wireless communication, comprising:
transmitting, by a network device, first information to a terminal device on a first bandwidth part, BWP, the first information being used for indicating a second BWP, wherein the first BWP is a currently activated BWP for the terminal device; and
performing, by the network device, communication with the terminal device on the second BWP.

18. The method of claim 17, wherein performing, by the network device, communication with the terminal device on the second BWP comprises:
determining, by the network device, that the terminal device switches the activated BWP from the first BWP to the second BWP.

19. The method of claim 18, further comprising:
after completing the communication with the terminal device on the second BWP, determining, by the network device, that the activated BWP for the terminal device is switched from the second BWP to the first BWP.

20. The method of claim 19, wherein the first information is further used for indicating transmission of first data on a first time-frequency resource of the second BWP, and wherein completing, by the network device, the communication with the terminal device on the second BWP comprises:
completing, by the network device, the transmission of the first data with the terminal device on the first time-frequency resource.

21. The method of claim 20, further comprising:
performing, by the network device, transmission of feedback information for the first data on the first BWP; or
performing, by the network device, transmission of the feedback information for the first data on the second BWP.

22. The method of any one of claims 19 to 21, wherein determining, by the network device, that the activated BWP for the terminal device is switched from the second BWP to the first BWP comprises:
determining, by the network device after a first period of time, that the terminal device switches to the first BWP.

23. The method of claim 17, wherein performing, by the network device, the communication with the terminal device on the second BWP comprises:
determining, by the network device, that the terminal device maintains the first BWP as the activated BWP, and performing the communication with the terminal device on the second BWP.

24. The method of claim 23, wherein the first information is further used for indicating transmission of first data on a first time-frequency resource of the second BWP, and wherein performing, by the network device, the communication with the terminal device on the second BWP comprises:
performing, by the network device, the transmission of the first data on the first time-frequency resource of the second BWP.

25. The method of claim 24, further comprising:
performing, by the network device, transmission of feedback information for the first data on the first BWP; or
performing, by the network device, transmission of the feedback information for the first data on the second BWP.

26. The method of any one of claims 17 to 25, wherein the terminal device comprises a primary receiver and a secondary receiver, and the first information is further used for indicating turning off of the primary receiver.

27. The method of claim 26, further comprising:
transmitting, by the network device, second information, wherein the second information indicates waking up of the primary receiver.

28. The method of claim 27, wherein the transmission of the second information is performed on the second BWP.

29. The method of any one of claims 17 to 28, wherein the first information is further used for indicating whether to switch the activated BWP from the first BWP to the second BWP.

30. The method of any one of claims 17 to 29, wherein the first information is further used for indicating whether to switch the activated BWP from the second BWP to the first BWP after the communication is completed on the second BWP.

31. The method of any one of claims 17 to 30, wherein the second BWP comprises at least one of:
a BWP where a wake up signal, WUS, is located, a BWP where an energy saving signal is located, or a BWP where a paging signal is located.

32. The method of any one of claims 17 to 31, wherein performing, by the network device, the communication with the terminal device on the second BWP comprises:
performing, by the network device, the communication on the second BWP after a second period of time.

33. An apparatus for wireless communication, applied to a terminal device, the apparatus comprising:
a first transceiver unit, configured to receive first information on a first bandwidth part, BWP, the first information being used for indicating a second BWP, wherein the first BWP is a currently activated BWP for the terminal device; and
wherein the first transceiver unit is further configured to perform communication on the second BWP.

34. An apparatus for wireless communication, applied to a network device, the apparatus comprising:
a second transceiver unit, configured to transmit first information to a terminal device on a first bandwidth part, BWP, the first information being used for indicating a second BWP, wherein the first BWP is a currently activated BWP for the terminal device; and
wherein the second transceiver unit is further configured to perform communication with the terminal device on the second BWP.

35. A terminal device, comprising: a processor and a memory, wherein the memory is configured to store a computer program, and the processor is configured to invoke and execute the computer program stored in the memory to perform the method of any one of claims 1 to 16.

36. A network device, comprising: a processor and a memory, wherein the memory is configured to store a computer program, and the processor is configured to invoke and execute the computer program stored in the memory to perform the method of any one of claims 17 to 32.

37. A chip, comprising: a processor, configured to invoke and execute a computer program from a memory to cause a device on which the chip is mounted to perform the method of any one of claims 1 to 16 or the method of any one of claims 17 to 32.

38. A computer storage medium having stored thereon a computer program that, when executed by a terminal device, causes the terminal device to perform the method of any one of claims 1 to 16, or when executed by a network device, causes the network device to perform the method of any one of claims 17 to 32.

39. A computer program product having stored therein computer program instructions that, when executed by a terminal device, cause the terminal device to perform the method of any one of claims 1 to 16, or when executed by a network device, causes the network device to perform the method of any one of claims 17 to 32.

40. A computer program that, when executed by a terminal device, causes the terminal device to perform the method of any one of claims 1 to 16, or when executed by a network device, causes the network device to perform the method of any one of claims 17 to 32.
